(19) Europäisches Patentamt
European Patent Office
Office européen des brevets

(11) EP 4 738 348 A1

(12) # EUROPEAN PATENT APPLICATION

published in accordance with Art. 153(4) EPC

(43) Date of publication:
**06.05.2026 Bulletin 2026/19**

(21) Application number: **23943034.1**

(22) Date of filing: **30.06.2023**

(51) International Patent Classification (IPC):
***G10L 19/02*** (2013.01) ***G10L 25/18*** (2013.01)

(52) Cooperative Patent Classification (CPC):
**G10L 19/0212; G10L 25/18;** Y02D 10/00

(86) International application number:
**PCT/CN2023/105388**

(87) International publication number:
**WO 2025/000543 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventors:
- **WANG, Di**
**Beijing 100085 (CN)**
- **WANG, Bin**
**Beijing 100085 (CN)**
- **LIU, Yong**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **AUDIO DATA PROCESSING METHOD AND APPARATUS, CHIP, AND ELECTRONIC DEVICE**

(57) An audio data processing method and apparatus (600), a chip, and an electronic device (800), relating to the technical field of data processing. The method comprises: obtaining a data matrix of audio data, wherein the data matrix is an MDF'T data matrix corresponding to the audio data in an AVS encoder (101); determining a target parameter value of an exponentiation parameter corresponding to each column vector in the data matrix (102); on the basis of the target parameter value, performing power transformation on each column vector in the data matrix to obtain a power-transformed matrix corresponding to the data matrix, wherein the power transformation is used for concentrating the variance of the data matrix in the direction of a principal component, and increasing the feature percentage of the principal component in the data matrix (103); and using a PCA dimension reduction algorithm to perform data dimension reduction processing on the power-transformed matrix to obtain a data dimension reduction result for the audio data (104). The accuracy of PCA module data dimension reduction in the AVS encoder can be improved.

obtaining a data matrix of audio data, wherein the data matrix is an MDFT data matrix corresponding to the audio data in an AVS encoder
101
determining a target parameter value of a power operation parameter corresponding to each column vector in the data matrix
102
obtaining a power transformation matrix corresponding to the data matrix by performing a power transformation on the each column vector in the data matrix based on the target parameter value, wherein the power transformation is used to concentrate a variance of the data matrix in a direction of principal components to enhance a feature proportion of the principal components in the data matrix
103
obtaining a data dimensionality reduction result of the audio data by performing data dimensionality reduction on the power transformation matrix using a PCA dimensionality reduction algorithm
104

FIG. 1

EP 4 738 348 A1

## Description

### TECHNICAL FIELD

The present disclosure relates to a field of data processing technology, and in particular, to a method and an apparatus for processing audio data, a chip, and an electronic device.

### BACKGROUND

With popularization of audio services, a new generation audio video coding standard (AVS) encoder is widely applied. In an encoding process of audio data by the AVS encoder, a principal component analysis (PCA) data dimensionality reduction algorithm may be used to perform dimensionality reduction processing on a modulated discrete fourier transform (MDFT) data matrix of the audio data obtained after MDFT transformation, mapping the audio data from a high-dimensional space to a low-dimensional space, which may help extract key information in the audio data and compress a data size of the audio data.

However, when the PCA dimensionality reduction algorithm selects principal components, an interpretation degree of a variance is mainly considered. In some cases, principal component features with a small variance but significant importance may be ignored, thus leading to lower accuracy of data dimensionality reduction by a PCA module in the AVS encoder.

### SUMMARY

The present disclosure provides a method and an apparatus for processing audio data, a chip, and an electronic device, which may, via power transformation processing, enable a PCA module in an AVS encoder to select a principal component matrix with a larger variance proportion when selecting principal components, thus solving a technical problem of lower accuracy of data dimensionality reduction by the PCA module in the AVS encoder.

According to a first aspect of the embodiments of the present disclosure, a method for processing audio data is provided, including: obtaining a data matrix of the audio data, in which the data matrix is an MDFT data matrix corresponding to the audio data in an AVS encoder; determining a target parameter value of power operation parameter corresponding to each column vector in the data matrix; obtaining a power transformation matrix corresponding to the data matrix by performing a power transformation on the each column vector in the data matrix based on the target parameter value, in which the power transformation is used to concentrate a variance of the data matrix in a direction of principal components to enhance a feature proportion of the principal components in the data matrix; and obtaining a data dimensionality reduction result of the audio data by performing data dimensionality reduction on the power transformation matrix using a PCA dimensionality reduction algorithm.

According to a second aspect of the embodiments of the present disclosure, an apparatus for processing audio data is provided, including: an obtaining module, configured to obtain a data matrix of the audio data, in which the data matrix is a modulated discrete fourier transform (MDFT) data matrix corresponding to the audio data in an AVS encoder; a determining module, configured to determine a target parameter value of a power operation parameter corresponding to each column vector in the data matrix; a power transformation module, configured to obtain a power transformation matrix corresponding to the data matrix by performing a power transformation on the each column vector in the data matrix based on the target parameter value, in which the power transformation is used to concentrate a variance of the data matrix in a direction of principal components to enhance a feature proportion of the principal components in the data matrix; and a processing module, configured to obtain a data dimensionality reduction result of the audio data by performing data dimensionality reduction on the power transformation matrix using a PCA dimensionality reduction algorithm.

According to a third aspect of the embodiments of the present disclosure, an electronic device is provided, including: at least one processor; and a memory communicatively connected to the at least one processor, in which the memory stores instructions executable by the at least one processor that, when executed by the at least one processor, cause the at least one processor to implement the method described in the first aspect of the embodiments of the present disclosure.

According to a fourth aspect of the embodiments of the present disclosure, a non-transitory computer-readable storage medium for storing computer instructions is provided, in which the computer instructions are configured to cause a computer to implement the method described in the first aspect of the embodiments of the present disclosure.

According to a fifth aspect of the embodiments of the present disclosure, a chip is provided, including: one or more interface circuits; and one or more processors, in which the interface circuits are configured to receive a signal from a memory of an electronic device and send the signal to the processors, and the signal includes computer instructions stored in the memory that, when executed by the processor, cause the electronic device to implement the method described in the first aspect of the embodiments of the present disclosure.

In summary, according to the method and the apparatus for processing audio data, the chip, and the electronic device provided in the present disclosure, a data matrix of the audio data may be obtained; a target parameter value of a power operation parameter corresponding to each column vector in the data matrix is determined; a power transformation matrix corresponding to the data matrix is obtained by performing a power transformation on each column vector in the data matrix based on the target parameter value, in which the power transformation is used to concentrate a variance of the data matrix in a direction of principal components to enhance a feature proportion of the principal components in the data matrix; and finally a data dimensionality reduction result of the audio data is obtained by performing a data dimensionality reduction on the power transformation matrix using a PCA dimensionality reduction algorithm. The technical solution in the present disclosure, via power transformation processing, may concentrate the variance of the data matrix corresponding to the audio data in the direction of the principal components, enhance the feature proportion of the principal components in the data matrix, and enable a PCA module in an AVS encoder to select a principal component matrix with a larger variance proportion when selecting the principal components, further improving accuracy of data dimensionality reduction by the PCA module.

Additional aspects and advantages of the embodiments of present disclosure will be given in part in the following descriptions, become apparent in part from the following descriptions, or be learned from the practice of the embodiments of the present disclosure.

## BRIEF DESCRIPTION OF THE DRAWINGS

The accompanying drawings, which are incorporated in and constitute a part of the specification, illustrate embodiments consistent with the present disclosure and, together with the specification, serve to explain the principles of the embodiments of the present disclosure, and do not constitute an improper limitation of the present disclosure.

FIG. 1 is a flowchart of a method for processing audio data according to an embodiment of the present disclosure.
FIG. 2 is a flowchart of a method for determining a power operation parameter according to an embodiment of the present disclosure.
FIG. 3 is a schematic diagram of an example of a data matrix according to an embodiment of the present disclosure.
FIG. 4 is a schematic diagram of an example of a restoration matrix corresponding to a principal component analysis (PCA) dimensionality reduction algorithm according to an embodiment of the present disclosure.
FIG. 5 is a schematic diagram of an example of a restoration matrix corresponding to a PCA dimensionality reduction algorithm after a power transformation according to an embodiment of the present disclosure.
FIG. 6 is a block diagram of an apparatus for processing audio data according to an embodiment of the present disclosure.
FIG. 7 is a block diagram of an electronic device according to an embodiment of the present disclosure.

## DETAILED DESCRIPTION

The embodiments of the present disclosure are described in detail below. Examples of the embodiments are shown in the accompanying drawings, throughout which the same or similar reference numerals represent the same or similar elements or elements having the same or similar functions. The embodiments below with reference to the accompanying drawings are exemplary and are intended to explain the present disclosure, but should not be construed as a limitation to the present disclosure.

The embodiments of the present disclosure are described in detail below. Examples of the embodiments are shown in the accompanying drawings, throughout which the same or similar reference numerals represent the same or similar elements or elements having the same or similar functions. The embodiments below with reference to the accompanying drawings are exemplary and are intended to explain the present disclosure, but should not be construed as a limitation to the present disclosure. It should be noted that, without conflicts, the embodiments of the present disclosure and features in the embodiments may be combined with each other.

The terms used in the embodiments of the present disclosure are merely for the purpose of describing a detailed embodiment, and are not intended to limit the disclosure. As used in the disclosure and the appended claims, a singular form "a/an" or "the" is also intended to include plural forms, unless the context clearly indicates other meaning. It should also be understood that, the term "and/or" as used herein refers to including any or all possible combinations of one or more associated listed items.

It should be understood that although terms "first", "second", "third" and the like may be employed in the disclosure to describe various kinds of information, the information should not be limited to these terms. These terms are merely used to distinguish a same type of information from each other. For example, without departing from a scope of the disclosure, first information may also be called second information, and similarly, second information may also be called first information. Depending on the context, the word "if" as used herein may be interpreted as "when" or "in a case that..." or "in response to a determination".

To solve the above technical problem, the present disclosure provides a method and an apparatus for processing audio data, a chip, and an electronic device, which may enable the PCA dimensionality reduction algorithm to accurately screen out the principal components in the audio data, improve accuracy of data dimensionality reduction in the AVS encoder, and enhance effectiveness of the AVS encoder in encoding audio data.

Principal component analysis (PCA) algorithm belongs to a field of multivariate statistical analysis. The multivariate statistical analysis is a statistical field that studies relationships among a plurality of variables, and the PCA algorithm, as a method in the multivariate statistical analysis, is used to reduce data dimensionality and extract main features. Due to advantages of the PCA algorithm in feature extraction, dimensionality reduction, and data analysis, the PCA algorithm may be applied in many different fields. For example, in a field of data preprocessing, the PCA algorithm may be used for data preprocessing, reducing data dimensionality and noise, and improving effectiveness of subsequent analysis. The PCA algorithm may be used for tasks such as data cleaning, feature selection, noise reduction, and the like. In a field of image processing and computer vision, the PCA algorithm is widely applied in the field of image processing and computer vision. The PCA algorithm may be used for tasks such as image compression, feature extraction, face recognition, object detection, image classification, and the like. In a field of data visualization, the PCA algorithm may map high-dimensional data to a low-dimensional space, helping to visualize and understand a structure and a relationship of data. The PCA algorithm may be used for data set visualization, cluster analysis, anomaly detection, and the like. For example, in the technical solution of the present disclosure, the PCA algorithm may be applied to a field of audio signal compression processing, mapping high-dimensional data to a low-dimensional space, and is applicable to various types of service data, which is not specifically limited here.

The PCA algorithm is a commonly used data dimensionality reduction algorithm for extracting core features from a data matrix. The PCA algorithm obtains a principal component matrix by projecting original data into a new feature space via a linear transformation. Original data information is concentrated in principal components with a relatively large variance proportion in the principal component matrix. At this time, as long as principal component vectors with a relatively large variance proportion in the principal component matrix is retained, most of information in the original data may be preserved while reducing a data dimensionality. However, the PCA algorithm has certain limitations. When the PCA algorithm selects principal components, an interpretation degree of a variance is mainly considered. In some cases, features with a small variance but significant importance may be ignored, thus leading to lower accuracy of data dimensionality reduction processing.

In view of this, as a possible implementation, a power transformation model Box-Cox may be used to change a distribution form of the original data to make it closer to a normal distribution. A determination equation of the Box-Cox algorithm is as follows:

$$y^{(\lambda)} = \begin{cases} \left(y^{\lambda} - 1\right)/\lambda, \lambda != 0 \\ \ln(y), \lambda = 0 \end{cases}$$

In the equation, $y$ represents a column element in a column vector of a data matrix, and $\lambda$ represents a power operation parameter vector.

In the Box-Cox algorithm, the aim is to perform a Box-Cox power transformation on elements in column vectors of an input data matrix. A main characteristic of the Box-Cox power transformation is an introduction of a transformation parameter λ, which is estimated from the data itself to determine a form of a data transformation that should be adopted. By using a maximum likelihood estimation method on transformed data, a value of λ that makes a column vector closest to the normal distribution may be determined. After obtaining the value of λ, output data of the Box-Cox transformation may be determined. The Box-Cox algorithm may improve normality of vector data, making it more conform to normal distribution. Specifically, after performing the Box-Cox transformation on each column vector of the data matrix respectively, a data matrix with optimized normality is obtained, and then the data matrix is used as input of the PCA dimensionality reduction algorithm. The PCA dimensionality reduction algorithm has a better dimensionality reduction effect when the data matrix conforms to the normal distribution.

However, although the Box-Cox algorithm may improve normality of the column vector, the Box-Cox algorithm requires that input data should be all positive numbers. This may be seen from the equation of the Box-Cox algorithm. Data that the Box-Cox algorithm may process has great limitations. In addition, the Box-Cox algorithm requires a large amount of data to support. If a number of elements in the column vector is insufficient, the Box-Cox algorithm may obtain an incorrect transformation parameter λ under a condition of insufficient input data, or even make normality of the column vector worse. For example, when an input data matrix is a 4-dimensional square matrix, there are only 4 elements in a column vector. For a vector with only 4 elements, the Box-Cox algorithm may not effectively improve its normality, and may even worsen the normality of the vector. This causes the Box-Cox algorithm to perform poorly when processing a data matrix with few column vector elements. Although the Box-Cox algorithm encounters theoretical problems in an experiment of the 4-dimensional square matrix (the Box-Cox algorithm may not effectively improve the normality of column vectors of the 4-dimensional square matrix), an experimental result shows that performing a power operation on the column vectors of the data matrix may affect an effect of the PCA dimensionality reduction algorithm on the data matrix.

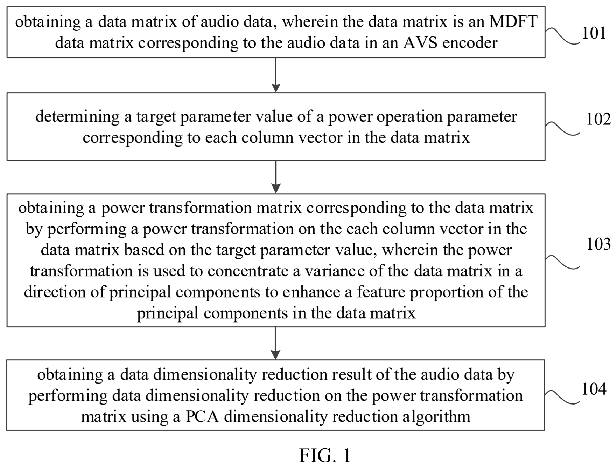

In view of this, as a possible implementation, an improved PCA dimensionality reduction algorithm may be provided. FIG. 1 is a flowchart of a method for processing audio data according to an exemplary embodiment. As shown in FIG. 1, the method includes following steps at blocks 101 to 104.

At block 101, a data matrix of the audio data is obtained, in which the data matrix is an MDFT data matrix corresponding to the audio data in an AVS encoder.

The audio data may be an audio signal input to an MDFT transformation module after a series of module processing in a new generation AVS encoder on original audio data. The original audio data may be audio type data generated in any service scenario, and the service scenario generating the audio type data is not specifically limited here. In the AVS encoder, the audio data is obtained after the original audio data is processed by a series of modules, and then the MDFT data matrix is obtained after the audio data undergoes an MDFT transformation. The MDFT data matrix may be used as input for a subsequent PCA dimensionality reduction module in the AVS encoder for data dimensionality reduction processing. Data dimensionality reduction refers to reducing high-dimensional data into a lower-dimensional data form, which may remove redundant information in the data and retain the most important features, and is used to reduce a storage space and a computational cost.

In the embodiments of the present disclosure, a processing result of the original audio data by a module preceding the PCA dimensionality reduction module in the AVS encoder may be obtained, so as to obtain data matrix A corresponding to the audio data. In data matrix A, there are m column vectors in total, and A = {a1, a2, a3, ..., am} may be obtained. Each column in the data matrix serves as a column vector and may respectively be used as a feature to participate in a subsequent power operation process.

At block 102, a target parameter value of a power operation parameter corresponding to each column vector in the data matrix is determined.

In specific application scenarios, to improve performance of the PCA dimensionality reduction algorithm, corresponding power operation parameters may be determined for different column vectors of the data matrix respectively. Different column vectors correspond to different power operation parameters, and elements in a same column vector use a same power operation parameter for a power operation. In the embodiments of the present disclosure, solving for the target parameter value of the power operation parameter corresponding to each column vector is to find a set of power operation parameters corresponding to the data matrix. With a power transformation of the set of power operation parameters, a variance of the data matrix may be mostly concentrated in a direction of principal components, that is, increasing a variance proportion of a principal component matrix selected in the PCA dimensionality reduction algorithm.

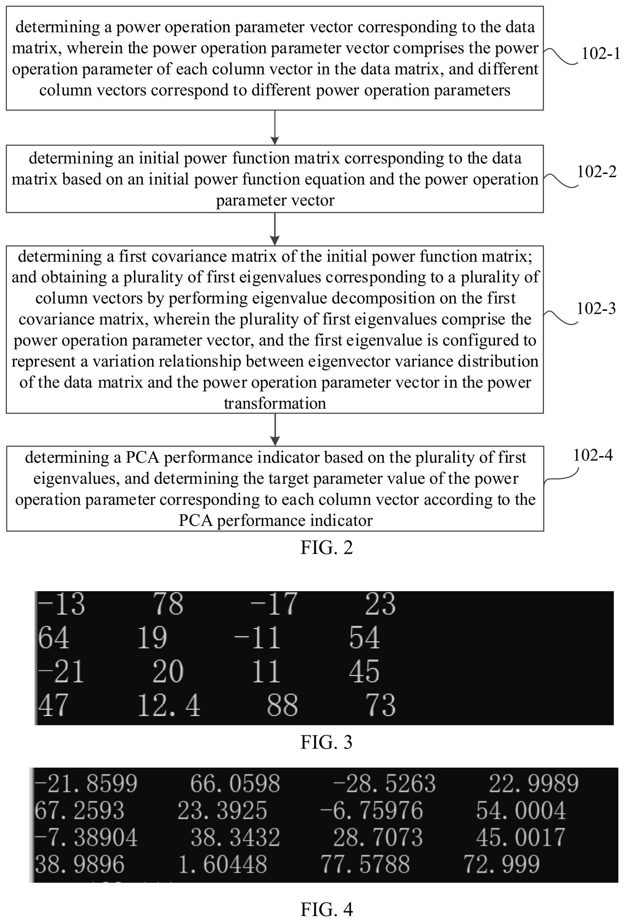

In the embodiments of the present disclosure, when determining the target parameter value of the power operation parameter corresponding to each column vector in the data matrix, as shown in FIG. 2, embodiment steps may include steps at block 102-1 to 102-4.

At block 102-1, a power operation parameter vector corresponding to the data matrix is determined, in which the power operation parameter vector includes the power operation parameter corresponding to each column vector in the data matrix, and different column vectors correspond to different power operation parameters.

When the data matrix includes m column vectors, the power operation parameter vector corresponding to the data matrix may be $\lambda = \{\lambda 1, \lambda 2, \lambda 3 \cdots \lambda m\}$.

At block 102-2, an initial power function matrix corresponding to the data matrix is determined based on an initial power function equation and the power operation parameter vector.

An initial power function equation is characterized by the following formula:

$$\left|y^{(\lambda)}\right| = \begin{cases} |y|^{\lambda}, \lambda != 0 \\ \ln(|y|+1), \lambda = 0 \end{cases}$$

In the equation, $y$ represents a column element in a column vector, $|y^{(\lambda)}|$ represents an absolute value of a power operation result corresponding to the column element, a sign of $y^{\lambda}$ is the same as a sign of $y$, and $\lambda$ represents the power operation parameter vector, $\lambda = \{\lambda 1, \lambda 2, \lambda 3 \cdots \lambda m\}$. The power operation parameter vector may include power operation parameters $\lambda 1$, $\lambda 2$, $\lambda 3 ...$, $\lambda m$ corresponding to column vectors in the data matrix, and m represents a number of column vectors.

In the embodiments of the present disclosure, compared to a limitation of a determination equation of the Box-Cox algorithm which requires input data to be all positive numbers, the power operation equation in this solution is optimized and improved, enabling the power operation equation to handle non-positive elements by solving the absolute value of the power operation result corresponding to the column element.

Correspondingly, when determining the initial power function matrix corresponding to the data matrix based on the initial power function equation and the power operation parameter vector, the power operation parameter corresponding to each column vector may be substituted into the initial power function equation to obtain the power function equation including a unknown variable $\lambda$ for the column vector, and then the power operation result of each column element in the column vector may be determined based on the power function equation. For example, for a first column vector in the data matrix, after substituting a corresponding power operation parameter $\lambda 1$ into the initial power function equation, a power function equation including a variable $\lambda 1$ corresponding to the first column vector may be obtained: $\left|y^{(\lambda 1)}\right| = \begin{cases} |y|^{\lambda 1}, \lambda 1 != 0 \\ \ln(|y|+1), \lambda 1 = 0 \end{cases}$, and then based on the power function equation, a power operation result including the variable $\lambda 1$ corresponding to each column element in the first column vector may be determined. For a second column vector in the data matrix, after substituting a corresponding power operation parameter $\lambda 2$ into the initial power function equation, a power function equation including the variable $\lambda 2$ corresponding to the second column vector may be obtained: $\left|y^{(\lambda 2)}\right| = \begin{cases} |y|^{\lambda 2}, \lambda 2 != 0 \\ \ln(|y|+1), \lambda 2 = 0 \end{cases}$, and then based on the power function equation, a power operation result including the variable $\lambda 2$ corresponding to each column element in the second column vector may be determined.... For an m$^{th}$ column vector in the data matrix, after substituting a corresponding power operation parameter $\lambda m$ into the initial power function equation, a power function equation including the variable $\lambda m$ corresponding to the m$^{th}$ column vector may be obtained: $\left|y^{(\lambda m)}\right| = \begin{cases} |y|^{\lambda m}, \lambda m != 0 \\ \ln(|y|+1), \lambda m = 0 \end{cases}$, and then based on the power function equation, a power operation result including the variable $\lambda m$ corresponding to each column element in the m-th column vector may be determined. After power operation results for the m column elements of the data matrix are determined as above, the initial power function matrix corresponding to the data matrix $B = \{a1^{\lambda 1}, a2^{\lambda 2}, a3^{\lambda 3} \cdots am^{\lambda m}\}$ may be obtained.

At S102-3, a first covariance matrix of the initial power function matrix is determined; and a plurality of first eigenvalues corresponding to a plurality of column vectors are obtained by performing eigenvalue decomposition on the first covariance matrix, in which the plurality of first eigenvalues include the power operation parameter vector $\lambda$, and the first eigenvalue is configured to represent a variation relationship between eigenvector variance distribution of the data matrix and the power operation parameter vector in the power transformation.

In a specific application scenario, variance distribution of the data matrix is reflected in eigenvalues of its covariance matrix. The larger an eigenvalue is, the larger the variance corresponding to the eigenvector is. At this time, the variance distribution changes with the power operation parameter vector $\lambda$. Therefore, a first covariance matrix $B^T B$ of the initial power function matrix B may be obtained. By performing eigenvalue decomposition on the first covariance matrix $B^T B$, a plurality of first eigenvalues $\{eval1^{\lambda}, eval2^{\lambda}, eval3^{\lambda} \cdots evalm^{\lambda}\}$, which includes the power operation parameter vector, corresponding to the plurality of column vectors are obtained. Based on the plurality of first eigenvalues, an optimal power operation parameter corresponding to each column vector is found. That is, a variance corresponding to a direction of the principal components is increased, so that the variance of the data matrix is concentrated in the direction of the principal components, and a feature proportion of the principal components in the data matrix is enhanced. Furthermore, among the plurality of eigenvectors, eigenvectors corresponding to the largest k eigenvalues may be accurately selected as the principal components, and the original data is projected onto into selected principal components to obtain dimensionality-reduced data. This enables the dimensionality-reduced data to reflect features of the principal components of the original data, that is, increasing a variance proportion of the principal component matrix selected in the PCA dimensionality reduction algorithm, thus improving effectiveness of the data dimensionality reduction.

At S102-4, a PCA performance indicator is determined based on the plurality of first eigenvalues, and the target parameter value of the power operation parameter corresponding to each column vector is determined according to the PCA performance indicator.

In a specific application scenario, when determining the optimal power operation parameters corresponding to each column vector, that is, determining the target parameter value of the power operation parameter corresponding to each column vector, a PCA performance indicator L may be defined. A quality of a PCA dimensionality reduction algorithm result on the power transformation matrix under different power operation parameter vectors $\lambda$ is compared by determining the PCA performance indicator L. A larger value of the PCA performance indicator L indicates a better result of performing the PCA dimensionality reduction algorithm on the data matrix obtained via the power operation. Specifically, a PCA performance indicator estimation equation for evaluating the PCA performance indicator L based on the power operation parameter vector $\lambda$ may be provided. Then, based on the PCA performance indicator estimation equation and the plurality of first eigenvalues, a following determination process may be repeatedly executed until it is determined that the PCA performance indicator reaches a maximum value. The power operation parameter corresponding to each column vector when the PCA performance indicator reaches the maximum value is extracted: determining the PCA performance indicator by inputting the power operation parameter vector into the PCA performance indicator estimation equation and selecting a preset number of first eigenvalues among the plurality of first eigenvalues and inputting the preset number of first eigenvalues into the PCA performance indicator estimation equation.

The PCA performance indicator estimation equation is characterized by the following formula:

$$L^{\lambda} = \frac{eval1^{\lambda} + eval2^{\lambda} + \cdots + evalk^{\lambda}}{evalsum^{\lambda}} \quad \lambda = \{\lambda 1, \lambda 2, \lambda 3, \cdots, \lambda m\}$$

In the equation, $L^{\lambda}$ represents the PCA performance indicator, $eval1^{\lambda}$, $eval1^{\lambda}$, $\cdots$ , $evalk^{\lambda}$ represent the preset number of first eigenvalues among the plurality of first eigenvalues, k represents a target dimensionality of the data dimensionality reduction, k<m, *evalsum* represents a sum of absolute values of the plurality of first eigenvalues, $\lambda = \{\lambda 1, \lambda 2, \lambda 3 \cdots \lambda m\}$ represents the power operation parameter vector, each of $\lambda 1$, $\lambda 2$,$\lambda 3$...,$\lambda m$ represent the power operation parameters corresponding to each column vector in the power operation parameter vector, and *m* represents a number of column vectors.

Correspondingly, when determining the PCA performance indicator by inputting the power operation parameter vector into the PCA performance indicator estimation equation and selecting the preset number of first eigenvalues among the plurality of first eigenvalues and inputting the preset number of first eigenvalues into the PCA performance indicator estimation equation, the PCA performance indicator L may be regarded as an m-dimensional equation concerning m power operation parameters. A larger value of the PCA performance indicator L indicates a better result of performing the PCA dimensionality reduction algorithm on the data matrix obtained via the power operation. Therefore, the vector $\lambda$ corresponding to the maximum value of the above PCA performance indicator estimation equation is an optimal power operation parameter vector. The optimal power operation parameter vector may include a specific parameter value of the power operation parameter corresponding to each column vector, that is, the target parameter value.

In the embodiments of the present disclosure, the PCA performance indicator L is used to evaluate a quality of the power operation result of the data matrix. A determination equation of the PCA performance indicator L is not rely on normality performance of any single column vector after the power operation, but relies on whether an entire data matrix after the power operation is more suitable for processing by the PCA dimensionality reduction algorithm. Determining a power transformation matrix via the PCA performance indicator L may not only overcome a problem of insufficient number of elements, but a transformed matrix is also more suitable for the PCA dimensionality reduction.

At block 103, a power transformation matrix corresponding to the data matrix is obtained by performing a power transformation on each column vector in the data matrix based on the target parameter value, in which the power transformation is used to concentrate a variance of the data matrix in the direction of the principal components to enhance a feature proportion of the principal components in the data matrix.

In the embodiments of the present disclosure, when determining the power transformation matrix corresponding to the data matrix by performing the power transformation on each column vector in the data matrix, the target parameter value of the power operation parameter corresponding to each column vector may be substituted into the initial power function equation to determine the power operation result corresponding to the each column element. After a determination of the power operation result of each column element, the power transformation matrix corresponding to the data matrix is obtained. A value range of the target parameter value may be (-2, 2). For example, if a determined target parameter value of the power operation parameter $\lambda 1$ corresponding to a first column vector in the data matrix is 0, the target parameter value may be substituted into a power function equation which includes the variable $\lambda 1$: $\left|y^{(\lambda 1)}\right| = \begin{cases} |y|^{\lambda 1}, \lambda 1 != 0 \\ \ln(|y|+1), \lambda 1 = 0 \end{cases}$ , and then based on the power function equation, a power operation result corresponding to each column element in the first column vector may be determined as $|y^{(\lambda 1)}| = \ln(|y|+1)$; if a determined target parameter value of the power operation parameter $\lambda 2$ corresponding to a second column vector in the data matrix is 1, the target parameter value may be substituted into a power function equation which includes the variable $\lambda 2$: $\left|y^{(\lambda 2)}\right| = \begin{cases} |y|^{\lambda 2}, \lambda 2 != 0 \\ \ln(|y|+1), \lambda 2 = 0 \end{cases}$ , and then based on the power function equation, a power operation result corresponding to each column element in the second column vector may be determined as $|y^{\lambda 2}| = |y|^{1}$; ..., and after power operation results of m column elements of the data matrix are determined as above, the power transformation matrix corresponding to the data matrix may be obtained.

At block 104, a data dimensionality reduction result of the audio data is obtained by performing data dimensionality reduction on the power transformation matrix using a PCA dimensionality reduction algorithm.

In the embodiments of the present disclosure, the power transformation matrix obtained in an embodiment step block 103 may be used as input to the PCA dimensionality reduction algorithm for the PCA dimensionality reduction determination. In a stage of restoring an original matrix in the PCA dimensionality reduction algorithm, a corresponding inverse transformation may be performed according to the power operation parameter vector $\lambda$ and the power function operation equation to restore an original audio data matrix. Given that a variance in the power transformation matrix is concentrated in the direction of the principal components and a feature proportion of the principal components is relatively large, a data dimensionality reduction effect of the audio data may be ensured, and a restoration effect when restoring the audio data matrix may also be ensured.

In the PCA dimensionality reduction algorithm, the principal component matrix is composed of eigenvectors of the covariance matrix. The principal component matrix is an orthogonal matrix, in which each column corresponds to a principal component. Column vectors of the principal component matrix are eigenvectors of the covariance matrix, which is sorted according to a size of corresponding eigenvalues. Variance distribution is reflected in the eigenvalue of its covariance matrix. Variance determination is that a sum of selected eigenvalues of the principal components divided by a total sum of the eigenvalues. Therefore, the larger the eigenvalue is, the larger a variance on its eigenvector will be. Assuming that a power transformation matrix X is obtained via the above embodiment steps, in which each column vector in the power transformation matrix X represents a feature, and each row represents a sample. In the power transformation matrix X, principal components have a relatively large variance proportion. In the embodiments of the present disclosure, when performing data dimensionality reduction on the original data based on the power transformation matrix X: first, a covariance matrix C of the power transformation matrix X may be determined. Then, eigenvalue decomposition is performed on C to obtain eigenvalues and corresponding eigenvectors. The eigenvectors are sorted in a descending order, and the top k eigenvectors (k represents a number of selected principal components, i.e., the target dimensionality of the data dimensionality reduction) are selected to form a principal component matrix P. A dimension of P is $n \times k$, where n is a number of features of the original data. The column vectors of the principal component matrix P are principal components of the data, and they are linear combinations of the original data. Multiplying the power transformation matrix X corresponding to the original data by the principal component matrix P yields a projection in a principal component space, that is, mapping the original data onto the principal component. This process may be expressed as $Y = XP$, where Y is a mapping matrix.

Correspondingly, in the embodiments of the present disclosure, when obtaining the data dimensionality reduction result of the audio data by performing the data dimensionality reduction on the power transformation matrix using the PCA dimensionality reduction algorithm, embodiment steps may include: performing standardization processing on the power transformation matrix, so that each column vector in the power transformation matrix has a mean of 0 and a variance of 1. This step is to ensure that each feature has a same level of importance to the PCA result; determining a second covariance matrix between features, in which the second covariance matrix describes a linear relationship between the features; obtaining a plurality of second eigenvalues corresponding to a plurality of column vectors and a plurality of second eigenvectors corresponding to the plurality of second eigenvalues by performing eigenvalue decomposition on the second covariance matrix, in which the second eigenvalue is configured to represent a variance of the second eigenvector of the data matrix after the power transformation, and the second eigenvalue is configured to represent a direction of the audio data in a new feature space; according to an order of the second eigenvalues in a descending order, forming a principal component matrix by selecting a preset number k of second eigenvalues among the plurality of second eigenvalues, where k represents a target dimension that is expected to be reduced to, $k < m$; and obtaining the data dimensionality reduction result of the audio data by projecting the audio data onto the principal component matrix.

In the PCA dimensionality reduction algorithm, determination of the second covariance matrix and solving of the second eigenvectors are performed because a core of the PCA dimensionality reduction algorithm is to find several directions in the data matrix where variances are most concentrated as the principal component matrix. These directions are reflected in eigenvectors of the second covariance matrix. The larger the eigenvalue of the eigenvector is, the larger the variance in that direction is. This step is to obtain k eigenvectors with largest eigenvalues.

In a specific application scenario, tests show that a data matrix processed by power transformation yields a better restoration result when a same number of principal components are retained via the PCA dimensionality reduction algorithm.

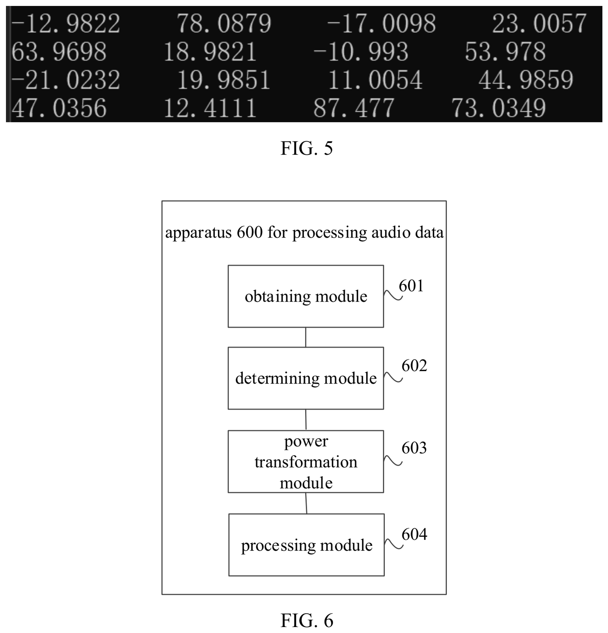

Taking a four-dimensional square matrix as an input matrix of the PCA dimensionality reduction algorithm (i.e., the MDFT data matrix corresponding to the audio data) and two principal components need to be retained as a test case, in which the MDFT data matrix may be referred to FIG. 3, a restoration matrix corresponding to the PCA dimensionality reduction algorithm may be referred to FIG. 4, and a restoration matrix corresponding to the PCA dimensionality reduction algorithm after the power transformation may be referred to FIG. 5. Based on comparison, it may be concluded that the restoration matrix corresponding to the PCA dimensionality reduction algorithm improved by the power operation is closer to the original matrix, with a relative error sum of 0.0164972 (a sum of absolute values of differences between corresponding elements divided by original elements), while a relative error sum of an unimproved PCA dimensionality reduction algorithm is: 11.8591. It may be seen that the technical solution in the present disclosure may effectively perform the data dimensionality reduction and improve accuracy of the data dimensionality reduction.

In summary, according to the method for processing audio data provided in the present disclosure, the data matrix of the audio data may be obtained; the power operation parameter corresponding to each column vector in the data matrix is determined; the power transformation matrix corresponding to the data matrix is obtained by performing the power transformation on each column vector in the data matrix based on the target parameter value, in which the power transformation is used to concentrate the variance of the data matrix in the direction of the principal components to enhance the feature proportion of the principal components in the data matrix; and finally the data dimensionality reduction result of the audio data is obtained by performing the data dimensionality reduction on the power transformation matrix using the PCA dimensionality reduction algorithm. The technical solution in the present disclosure, based on the power transformation processing, may concentrate the variance of the data matrix corresponding to the audio data in the direction of the principal component, enhance the feature proportion of the principal components in the data matrix, and enable a PCA module in the AVS encoder to select a principal component matrix with a larger variance proportion when selecting the principal components, further improving accuracy of the data dimensionality reduction by the PCA module.

Based on implementations of the method shown in FIG. 1 above, the embodiments provide an apparatus 600 for processing audio data. As shown in FIG. 6, the apparatus 600 includes: an obtaining module 601, a determining module 602, a power transformation module 603, and a processing module 604. The obtaining module 601 is configured to obtain a data matrix of the audio data, in which the data matrix is an MDFT data matrix corresponding to the audio data in an AVS encoder. The determining module 602 is configured to determine a target parameter value of a power operation parameter corresponding to each column vector in the data matrix. The power transformation module 603 is configured to obtain a power transformation matrix corresponding to the data matrix by performing a power transformation on each column vector in the data matrix based on the target parameter value, in which the power transformation is used to concentrate a variance of the data matrix in a direction of principal components to enhance a feature proportion of the principal components in the data matrix. The processing module 604 is configured to obtain a data dimensionality reduction result of the audio data by performing data dimensionality reduction on the power transformation matrix using a PCA dimensionality reduction algorithm.

In an embodiment of the present disclosure, the determining module 602 is specifically configured to determine a power operation parameter vector $\lambda$ corresponding to the data matrix, in which the power operation parameter vector $\lambda$ includes the power operation parameter of each column vector in the data matrix, and different column vectors correspond to different power operation parameters; determine an initial power function matrix corresponding to the data matrix based on an initial power function equation and the power operation parameter vector $\lambda$; determine a first covariance matrix of the initial power function matrix; obtain a plurality of first eigenvalues corresponding to a plurality of column vectors by performing eigenvalue decomposition on the first covariance matrix, in which the plurality of first eigenvalues include the power operation parameter vector $\lambda$, and a first eigenvalue is configured to represent a variation relationship between eigenvector variance distribution of the data matrix and the power operation parameter vector $\lambda$ in the power transformation; and determine a PCA performance indicator based on the plurality of first eigenvalues, and determine the target parameter value of the power operation parameter corresponding to each column vector according to the PCA performance indicator.

In an embodiment of the present disclosure, an initial power function equation is characterized by the following formula:

$$\left|y^{(\lambda)}\right| = \begin{cases} |y|^{\lambda}, \lambda != 0 \\ \ln(|y|+1), \lambda = 0 \end{cases}$$

In the equation, *y* represents a column element in a column vector, $|y^{(\lambda)}|$ represents an absolute value of a power operation result corresponding to the column element, a sign of $y^{\lambda}$ is the same as a sign of *y*, and $\lambda$ represents the power operation parameter vector.

In an embodiment of the present disclosure, the determining module 602 is specifically configured to repeatedly perform a following determination process until it is determined that the PCA performance indicator reaches a maximum value, and extract the target parameter value of the power operation parameter corresponding to each column vector when the PCA performance indicator reaches the maximum value: determine the PCA performance indicator by inputting the power operation parameter vector into a PCA performance indicator estimation equation and selecting a preset number of first eigenvalues among the plurality of first eigenvalues and inputting the preset number of first eigenvalues into the PCA performance indicator estimation equation.

In an embodiment of the present disclosure, the PCA performance indicator estimation equation is characterized by the following formula:

$$L^{\lambda} = \frac{eval1^{\lambda} + eval2^{\lambda} + \cdots + evalk^{\lambda}}{evalsum^{\lambda}} \quad \lambda = \{\lambda 1, \lambda 2, \lambda 3, \cdots, \lambda m\}$$

In the equation, $L^{\lambda}$ represents the PCA performance indicator, $eval1^{\lambda}$, $eval1^{\lambda}$, $\cdots$, $evalk^{\lambda}$ represent the preset number of first eigenvalues among the plurality of first eigenvalues, the preset number is a target dimension of the data dimensionality reduction, *evalsum* represents a sum of absolute values of the plurality of first eigenvalues, $\lambda = \{\lambda 1, \lambda 2, \lambda 3 \cdots \lambda m\}$ represents the power operation parameter vector, $\lambda 1$, $\lambda 2$, $\lambda 3 \cdots$, $\lambda m$ represent the power operation parameter corresponding to each column vector in the power operation parameter vector, and *m* represents a number of column vectors.

In an embodiment of the present disclosure, the power transformation module 603 is specifically configured to determine a power operation result corresponding to each column element by substituting the target parameter value of the power operation parameter corresponding to the each column vector into the initial power function equation; and obtain the power transformation matrix corresponding to the data matrix after determining the power operation result for each column element.

In an embodiment of the present disclosure, the processing module 604 is configured to perform standardization processing on the power transformation matrix, so that each column vector in the power transformation matrix has a mean of 0 and a variance of 1; determine a second covariance matrix between column vectors based on a standardized power transformation matrix; obtain a plurality of second eigenvalues corresponding to a plurality of column vectors and a plurality of second eigenvectors corresponding to the plurality of second eigenvalues by performing eigenvalue decomposition on the second covariance matrix, in which a second eigenvalue is configured to represent a variance of a second eigenvector of the data matrix after the power transformation; form a principal component matrix by selecting a preset number of second eigenvectors from the plurality of second eigenvectors according to a descending order of the second eigenvalues; and obtain the data dimensionality reduction result of the audio data by projecting the audio data onto the principal component matrix.

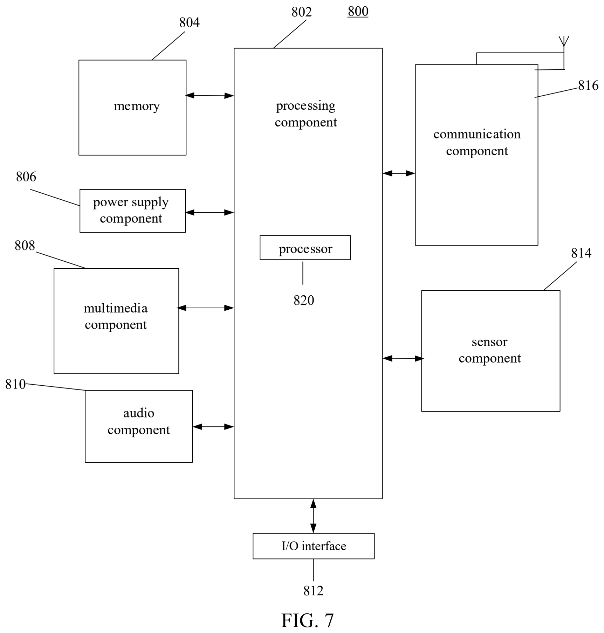

FIG. 7 is a block diagram of an electronic device 800 for implementing the above method for processing audio data according to an exemplary embodiment.

For example, the electronic device 800 may be a mobile phone, a computer, a message sending and receiving device, a game console, a tablet device, a medical device, a fitness device, a personal digital assistant, etc.

Referring to FIG. 7, the electronic device 800 may include one or more of: a processing component 802, a memory 804, a power supply component 806, a multimedia component 808, an audio component 810, an input/output (I/O) interface 812, a sensor component 814, and a communication component 816.

The processing component 802 generally controls an overall operation of the electronic device 800, such as those associated with a display, a telephone call, a data communication, a camera operation, and a recording operation. The processing component 802 may include one or more processors 820 to execute instructions to generate all or part of steps of the above methods. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations on the electronic device 800. Examples of these data include instructions of any application or method used to operate on the electronic device 800, contact data, phone book data, messages, pictures, videos, etc. The memory 804 may be implemented by any type of volatile or non-volatile memory or their combination, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The power supply component 806 provides power to various components of the electronic device 800. The power supply component 806 may include a power management system, one or more power supplies, and other components associated with generating, managing, and distributing power for the electronic device 800.

The multimedia component 808 includes a screen that provides an output interface between the electronic device 800 and a user. In some embodiments, the screen may include a liquid crystal display (LCD) and a touch panel (TP). If the screen includes a TP, the screen may be a touch screen to receive signals input by the user. The TP includes one or more touch sensors to sense a touch, a slide, and a gesture on the touch panel. The touch sensor may not only sense a boundary of a touch or sliding operation, but also detect a duration and pressure associated with the touch or sliding operation. In some embodiments, the multimedia component 808 includes a front camera and/or a rear camera. When the electronic device 800 is in an operating mode, such as a shooting mode or a video mode, the front camera and/or the rear camera may receive external multimedia data. Each of the front camera or the rear camera may be a fixed optical lens system or may have a focal length and an optical zoom capability.

The audio component 810 is configured to output and/or input audio signals. For example, the audio component 810 includes a microphone (MIC) that is configured to receive external audio signals when the electronic device 800 is in an operational mode, such as a call mode, a recording mode, and a speech recognition mode. A received audio signal may be further stored in the memory 804 or sent via a communication component 816. In some embodiments, the audio component 810 also includes a speaker for outputting an audio signal.

The I/O interface 812 provides an interface between the processing component 802 and a peripheral interface module. The peripheral interface module may be a keyboard, a click wheel, a button, etc. The button may include, but is not limited to: a home button, a volume button, a start button, and a locking button.

The sensor component 814 includes one or more sensors to provide a condition assessment of various aspects for the electronic device 800. For example, the sensor component 814 may detect an on/off state of the equipment 800, and a relative positioning of the component. For example, the component is a display and a keypad of the electronic device 800, the sensor component 814 may also detect a change of a position of the electronic device 800 or a change of a position of a component of the electronic device 800, detect a presence or an absence of a contact between the user and with the electronic device 800, detect a direction of the electronic device 800, or detect an acceleration/deceleration and detect a temperature change of the electronic device 800. The sensor component 814 may include a proximity sensor configured to detect a presence of a nearby object without any physical contact. The sensor component 814 may also include an optical sensor, such as a CMOS or CCD image sensor, for using in an imaging application. In some embodiments, the sensor component 814 may also include an acceleration sensor, a gyroscope sensor, a magnetic sensor, a pressure sensor, or a temperature sensor.

The communication component 816 is configured to facilitate a wired or wireless communication between the electronic device 800 and other devices. The electronic device 800 may access a wireless network based on a communication standard, such as wireless fidelity (WiFi™), 2nd Generation (2G) or 3rd Generation (3G), 4th Generation (4G) Long-Term Evolution (LTE), 5th Generation (5G) new radio (NR), or their combination. In an exemplary embodiment, the communication component 816 receives a broadcast signal or broadcast-related information from an external broadcast management system via a broadcast channel. In an exemplary embodiment, the communication component 816 also includes a near-field communication (NFC) module to facilitate a short-range communication. For example, the NFC module may be implemented based on a radio frequency identification (RFID) technology, an infrared data association (IrDA) technology, an ultra-wide band (UWB) technology, a bluetooth (BT) technology and other technologies.

In exemplary embodiments, the electronic device 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to implement the above methods.

In exemplary embodiments, a non-transitory computer-readable storage medium including instructions is also provided, such as a memory 804 including instructions. The instructions may be executed by the processor 820 of the electronic device 800 to implement the above methods. For example, the non-transitory computer-readable storage medium may be a read-only memory (ROM), a random access memory (RAM), a compact disc read-only memory (CD-ROM), a magnetic tape, a floppy disk, and an optical data storage device.

The embodiments of the present disclosure also provide a non-transitory computer-readable storage medium for storing computer instructions, in which the computer instructions are configured to cause a computer to implement the method for processing audio data described in the above embodiments of the present disclosure.

The embodiments of the present disclosure also provide a chip, including: one or more interface circuits; and one or more processors, in which the interface circuits are configured to receive a signal from a memory of an electronic device and send the signal to the one or more processors, and the signal includes computer instructions stored in the memory that, when executed by the one or more processor, cause the electronic device to implement the method for processing audio data described in the above embodiments of the present disclosure.

It needs to be noted that terms such as "first", "second", and the like in the specification and claims of the present disclosure and the above drawings are used to distinguish similar objects and do not necessarily describe a specific order or sequence. It should be understood that data used in this way may be interchanged in appropriate conditions, so that the embodiments of the present disclosure described herein may be implemented in an order other than those illustrated or described herein. The implementations described in the following exemplary embodiments do not represent all implementations consistent with the present disclosure. Instead, they are merely examples of apparatuses and methods consistent with aspects related to the disclosure as recited in the appended claims.

Reference throughout this specification to "an embodiment", "some embodiments", "an exemplary embodiment", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples.

Any process or method described in a flowchart or described herein in other ways may be understood to include one or more modules, segments or portions of codes of one or more executable instructions for achieving specific logical functions or steps in the process, and the scope of a preferred embodiment of the present disclosure includes other implementations, in which functions may be performed not in the order shown or discussed, including in a substantially simultaneous manner or in a reverse order according to the functions involved, which should be understood by those skilled in the art to which the embodiments of the present disclosure belong.

Logic and/or steps described in other manners herein or shown in the flowchart, for example, a particular sequence table of executable instructions for realizing the logical functions, may be specifically achieved in any computer-readable medium to be used by an instruction execution system, device or equipment (such as a system based on a computer, a system including a processing module or other systems that may fetch instructions from an instruction execution system, apparatus, or device and execute the instructions), or to be used in combination with the instruction execution system, device and equipment. As to the specification, "the computer-readable medium" may be any device adaptive for including, storing, communicating, propagating or transferring programs to be used by or in combination with the instruction execution system, device or equipment. More specific examples (a non-exhaustive list) of the computer-readable medium include: an electronic connection (a control method) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer-readable medium may even be a paper or another appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in a computer memory.

It may be understood that each part of the present disclosure may be realized by hardware, software, firmware or their combination. In the above embodiments, a plurality of steps or methods may be realized by the software or firmware stored in the memory and executed by an appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It may be understood by those skilled in the art that all or a part of the steps in the method in the above-described embodiments may be completed by relevant hardware instructed by a program. The program may be stored in a computer-readable storage medium. When the program is executed, one or a combination of the steps of the method in the above-described embodiments may be implemented.

In addition, individual functional units in the embodiments of the present disclosure may be integrated in one processing module or may be separately physically present, or two or more units may be integrated in one module. The integrated module as described above may be achieved in a form of hardware, or may be achieved in a form of a software functional module. If the integrated module is achieved in the form of a software functional module and sold or used as a separate product, the integrated module may also be stored in a computer-readable storage medium. The storage medium mentioned above may be a read-only memory, a magnetic disk, a CD, etc.

Although the embodiments of present disclosure have been shown and described above, it may be understood that above embodiments are just explanatory, and may not be construed to limit the present disclosure. For those skilled in the art, changes, alternatives, and modifications may be made to the above embodiments within the scope of the present disclosure.

## Claims

**1.** A method for processing audio data, comprising:

obtaining a data matrix of the audio data, wherein the data matrix is a modulated discrete fourier transform (MDFT) data matrix corresponding to the audio data in an audio video coding standard (AVS) encoder;
determining a target parameter value of a power operation parameter corresponding to each column vector in the data matrix;
obtaining a power transformation matrix corresponding to the data matrix by performing a power transformation on each column vector in the data matrix based on the target parameter value, wherein the power transformation is used to concentrate a variance of the data matrix in a direction of principal components to enhance a feature proportion of the principal components in the data matrix; and
obtaining a data dimensionality reduction result of the audio data by performing data dimensionality reduction on the power transformation matrix using a principal component analysis (PCA) dimensionality reduction algorithm.

2. The method of claim 1, wherein determining the target parameter value of the power operation parameter corresponding to each column vector in the data matrix comprises:

determining a power operation parameter vector $\lambda$ corresponding to the data matrix, wherein the power operation parameter vector $\lambda$ comprises the power operation parameter of the each column vector in the data matrix, and different column vectors correspond to different power operation parameters;
determining an initial power function matrix corresponding to the data matrix based on an initial power function equation and the power operation parameter vector $\lambda$;
determining a first covariance matrix of the initial power function matrix;
obtaining a plurality of first eigenvalues corresponding to a plurality of column vectors by performing eigenvalue decomposition on the first covariance matrix, wherein the plurality of first eigenvalues comprise the power operation parameter vector $\lambda$, wherein the first eigenvalue is configured to represent a variation relationship between eigenvector variance distribution of the data matrix and the power operation parameter vector $\lambda$ in the power transformation; and
determining a PCA performance indicator based on the plurality of first eigenvalues, and determining the target parameter value of the power operation parameter corresponding to each column vector according to the PCA performance indicator.

3. The method of claim 2, wherein the initial power function equation is **characterized by**:

$$\left|y^{(\lambda)}\right| = \begin{cases} \left|y\right|^{\lambda}, \lambda != 0 \\ \ln(\left|y\right|+1), \lambda = 0 \end{cases}$$

, where $y$ represents a column element in a column vector, $|y^{(\lambda)}|$ represents an absolute value of a power operation result corresponding to the column element, a sign of $y^{\lambda}$ is the same as a sign of $y$, and $\lambda$ represents the power operation parameter vector.

4. The method of claim 2, wherein determining the PCA performance indicator based on the plurality of first eigenvalues, and determining the target parameter value of the power operation parameter corresponding to each column vector according to the PCA performance indicator comprises:
repeatedly performing a following determination process until it is determined that the PCA performance indicator reaches a maximum value, and extracting the target parameter value of the power operation parameter corresponding to each column vector when the PCA performance indicator reaches the maximum value:
determining the PCA performance indicator by inputting the power operation parameter vector into a PCA performance indicator estimation equation and selecting a preset number of first eigenvalues among the plurality of first eigenvalues and inputting the preset number of first eigenvalues into the PCA performance indicator estimation equation.

5. The method of claim 4, wherein the PCA performance indicator estimation equation is **characterized by**:

$$L^{\lambda} = \frac{eval1^{\lambda} + eval2^{\lambda} + \cdots + evalk^{\lambda}}{evalsum^{\lambda}} \quad \lambda = \{\lambda 1, \lambda 2, \lambda 3, \cdots, \lambda m\}$$

where $L^{\lambda}$ represents the PCA performance indicator, $eval1^{\lambda}$, $eval1^{\lambda}$, $\cdots$ , $evalk^{\lambda}$ represent the preset number of first eigenvalues among the plurality of first eigenvalues, the preset number is a target dimension of the data dimensionality reduction, *evalsum* represents a sum of absolute values of the plurality of first eigenvalues, $\lambda = \{\lambda 1, \lambda 2, \lambda 3 \cdots \lambda m\}$ represents the power operation parameter vector, $\lambda 1$, $\lambda 2$,$\lambda 3$...,$\lambda m$ represent the power operation parameter corresponding to each column vector in the power operation parameter vector, and m represents a number of column vectors.

6. The method of claim 2, wherein obtaining the power transformation matrix corresponding to the data matrix by performing the power transformation on each column vector in the data matrix based on the target parameter value comprises:

determining a power operation result corresponding to each column element by substituting the target parameter value of the power operation parameter corresponding to each column vector into the initial power function equation; and
obtaining the power transformation matrix corresponding to the data matrix after determining the power operation result for each column element.

**7.** The method of claim 1, wherein obtaining the data dimensionality reduction result of the audio data by performing the data dimensionality reduction on the power transformation matrix using the PCA dimensionality reduction algorithm comprises:

performing standardization processing on the power transformation matrix, so that each column vector in the power transformation matrix has a mean of 0 and a variance of 1;
determining a second covariance matrix between column vectors based on a standardized power transformation matrix;
obtaining a plurality of second eigenvalues corresponding to a plurality of column vectors and a plurality of second eigenvectors corresponding to the plurality of second eigenvalues by performing eigenvalue decomposition on the second covariance matrix, wherein a second eigenvalue is configured to represent a variance of a second eigenvector of the data matrix after the power transformation;
forming a principal component matrix by selecting a preset number of second eigenvectors from the plurality of second eigenvectors according to a descending order of the second eigenvalues; and
obtaining the data dimensionality reduction result of the audio data by projecting the audio data onto the principal component matrix.

**8.** An apparatus for processing audio data, comprising:

an obtaining module, configured to obtain a data matrix of the audio data, wherein the data matrix is a modulated discrete fourier transform (MDFT) data matrix corresponding to the audio data in an audio video coding standard (AVS) encoder;
a determining module, configured to determine a target parameter value of a power operation parameter corresponding to each column vector in the data matrix;
a power transformation module, configured to obtain a power transformation matrix corresponding to the data matrix by performing a power transformation on each column vector in the data matrix based on the target parameter value, wherein the power transformation is used to concentrate a variance of the data matrix in a direction of principal components to enhance a feature proportion of the principal components in the data matrix; and
a processing module, configured to obtain a data dimensionality reduction result of the audio data by performing data dimensionality reduction on the power transformation matrix using a principal component analysis (PCA) dimensionality reduction algorithm.

**9.** An electronic device, comprising:

at least one processor; and
a memory communicatively connected to the at least one processor, wherein the memory stores instructions executable by the at least one processor that, when executed by the at least one processor, cause the at least one processor to implement the method of any one of claims 1 to 7.

**10.** A non-transitory computer-readable storage medium for storing computer instructions, wherein the computer instructions are configured to cause a computer to implement the method of any one of claims 1 to 7.

**11.** A chip, comprising: one or more interface circuits; and one or more processors, wherein the interface circuits are configured to receive a signal from a memory of an electronic device and send the signal to the processors, and the signal comprises computer instructions stored in the memory that, when executed by the processor, cause the electronic device to implement the method of any one of claims 1 to 7.

obtaining a data matrix of audio data, wherein the data matrix is an MDFT data matrix corresponding to the audio data in an AVS encoder
101
determining a target parameter value of a power operation parameter corresponding to each column vector in the data matrix
102
obtaining a power transformation matrix corresponding to the data matrix by performing a power transformation on the each column vector in the data matrix based on the target parameter value, wherein the power transformation is used to concentrate a variance of the data matrix in a direction of principal components to enhance a feature proportion of the principal components in the data matrix
103
obtaining a data dimensionality reduction result of the audio data by performing data dimensionality reduction on the power transformation matrix using a PCA dimensionality reduction algorithm
104

FIG. 1

determining a power operation parameter vector corresponding to the data matrix, wherein the power operation parameter vector comprises the power operation parameter of each column vector in the data matrix, and different column vectors correspond to different power operation parameters
102-1
determining an initial power function matrix corresponding to the data matrix based on an initial power function equation and the power operation parameter vector
102-2
determining a first covariance matrix of the initial power function matrix; and obtaining a plurality of first eigenvalues corresponding to a plurality of column vectors by performing eigenvalue decomposition on the first covariance matrix, wherein the plurality of first eigenvalues comprise the power operation parameter vector, and the first eigenvalue is configured to represent a variation relationship between eigenvector variance distribution of the data matrix and the power operation parameter vector in the power transformation
102-3
determining a PCA performance indicator based on the plurality of first eigenvalues, and determining the target parameter value of the power operation parameter corresponding to each column vector according to the PCA performance indicator
102-4

FIG. 2

| | | | |
|---|---|---|---|
| -13 | 78 | -17 | 23 |
| 64 | 19 | -11 | 54 |
| -21 | 20 | 11 | 45 |
| 47 | 12.4 | 88 | 73 |

FIG. 3

| | | | |
|---|---|---|---|
| -21.8599 | 66.0598 | -28.5263 | 22.9989 |
| 67.2593 | 23.3925 | -6.75976 | 54.0004 |
| -7.38904 | 38.3432 | 28.7073 | 45.0017 |
| 38.9896 | 1.60448 | 77.5788 | 72.999 |

FIG. 4

| | | | |
|---|---|---|---|
| -12.9822 | 78.0879 | -17.0098 | 23.0057 |
| 63.9698 | 18.9821 | -10.993 | 53.978 |
| -21.0232 | 19.9851 | 11.0054 | 44.9859 |
| 47.0356 | 12.4111 | 87.477 | 73.0349 |

FIG. 5

apparatus 600 for processing audio data
obtaining module
601
determining module
602
power transformation module
603
processing module
604

FIG. 6

800
802
804
memory
processing component
806
power supply component
808
multimedia component
810
audio component
processor
820
816
communication component
814
sensor component
I/O interface
812

FIG. 7

## INTERNATIONAL SEARCH REPORT

International application No. **PCT/CN2023/105388**

**A. CLASSIFICATION OF SUBJECT MATTER**

G10L 19/00(2013.01)i

According to International Patent Classification (IPC) or to both national classification and IPC

**B. FIELDS SEARCHED**

Minimum documentation searched (classification system followed by classification symbols)

IPC:G10L

Documentation searched other than minimum documentation to the extent that such documents are included in the fields searched

Electronic data base consulted during the international search (name of data base and, where practicable, search terms used)

DWPI, CNTXT, WPABS, ENTXT, CNKI: 音频, 声音, 矩阵, 编码, 解码, 幂运算, 幂变换, 参数, 方差, 主成分分析, 占比, 降维, 向量, 协方差, 特征值分解, 绝对值, 列元素, 估计, 均值, audio, sound, matrix, encoding, decoding, exponentiation, power transformation, parameters, variance, principal component analysis, PCA, fraction, dimensionality reduction, vector, covariance, eigenvalue decomposition, absolute value, column element, estimate, mean

**C. DOCUMENTS CONSIDERED TO BE RELEVANT**

| Category* | Citation of document, with indication, where appropriate, of the relevant passages | Relevant to claim No. |
|---|---|---|
| X | CN 115428068 A (VOICEAGE CORP.) 02 December 2022 (2022-12-02) description, paragraphs [0048]-[0201] | 1, 8-11 |
| A | CN 101526995 A (XIDIAN UNIVERSITY) 09 September 2009 (2009-09-09) entire document | 1-11 |
| A | US 2022148607 A1 (ORANGE) 12 May 2022 (2022-05-12) entire document | 1-11 |
| A | US 2023090763 A1 (OZTURK MUHAMMED ZAHID et al.) 23 March 2023 (2023-03-23) entire document | 1-11 |
| A | WO 2015096789 A1 (BEIJING ANGEL VOICE DIGITAL TECIINOLOGY CO., LTD.) 02 July 2015 (2015-07-02) entire document | 1-11 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 November 2023** | **22 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/105388**

| Patent document cited in search report | | | Publication date (day/month/year) | Patent family member(s) | | | Publication date (day/month/year) |
|---|---|---|---|---|---|---|---|
| CN | 115428068 | A | 02 December 2022 | US | 2023215448 | A1 | 06 July 2023 |
| | | | | KR | 20230002332 | A | 05 January 2023 |
| | | | | WO | 2021207825 | A1 | 21 October 2021 |
| | | | | JP | 2023521476 | A | 24 May 2023 |
| | | | | EP | 4136638 | A1 | 22 February 2023 |
| | | | | CA | 3170065 | A1 | 21 October 2021 |
| CN | 101526995 | A | 09 September 2009 | | None | | |
| US | 2022148607 | A1 | 12 May 2022 | EP | 3935629 | A1 | 12 January 2022 |
| | | | | KR | 20210137114 | A | 17 November 2021 |
| | | | | WO | 2020177981 | A1 | 10 September 2020 |
| | | | | EP | 3706119 | A1 | 09 September 2020 |
| | | | | JP | 2022523414 | A | 22 April 2022 |
| | | | | ZA | 202106465 | B | 27 July 2022 |
| US | 2023090763 | A1 | 23 March 2023 | | None | | |
| WO | 2015096789 | A1 | 02 July 2015 | CN | 104751850 | A | 01 July 2015 |
| | | | | CN | 104751850 | B | 02 April 2021 |

Form PCT/ISA/210 (patent family annex) (July 2022)